# EUROPÄISCHE PATENTANMELDUNG

(11) **EP 2 172 531 A1**
(43) Veröffentlichungstag der Anmeldung: **07.04.2010**
(21) Anmeldenummer: 08165802.3
(22) Anmeldetag: 03.10.2008
(51) Int. Cl.: C09K 3/30, G08B 29/14

(54) **Funktionsüberprüfung für einen Gasalarmmelder**

(71) Anmelder: Siemens Aktiengesellschaft, 80333 München (DE)
(72) Erfinder: Forster, Martin, 8645, Jona (CH)

(57) **Zusammenfassung**

Es wird eine Testvorrichtung zum Überprüfen der Funktionsfähigkeit eines Gasalarmmelders beschrieben. Die Testvorrichtung (100) weist auf einen Vorratsbehälter (110), in welchem sich ein Zielfluid (112b, 114b) und ein Trägerfluid (112a, 114a) befinden, wobei zumindest ein Teil des Trägerfluids (112a) in einem flüssigen Aggregatszustand vorliegt, und wobei das Zielfluid (112b) zumindest teilweise in dem flüssigen Trägerfluid (112a) gelöst ist, und eine Entnahmeeinrichtung (120, 122, 124), welche derart in den Vorratsbehälter (110) eingreift, dass das Zielfluid (112b) zusammen mit dem flüssigen Trägerfluid (112a) entnehmbar ist. Das Zielfluid (112a) ist derart beschaffen, das es, wenn es in einen Erfassungsbereich eines funktionsbereiten Gasalarmmelders gelangt, eine Alarmmeldung durch den Gasalarmmelder veranlasst.
Es wird außerdem ein Testsystem und ein Testverfahren zum Überprüfen der Funktionsfähigkeit eines Gasalarmmelders beschrieben. Ferner wird ein Verfahren zum Herstellen der genannten Testvorrichtung (100) beschrieben.

## Beschreibung

Die vorliegende Erfindung betrifft das technische Gebiet der Gasalarmmelder, welche im Falle der Anwesenheit eines vorgegebenen Gases eine Alarmmeldung ausgeben. Die vorliegende Erfindung betrifft insbesondere eine Testvorrichtung, ein Testsystem und ein Testverfahren zum Überprüfen der Funktionsfähigkeit eines Gasalarmmelders. Außerdem betrifft die vorliegende Erfindung ein Verfahren zum Herstellen der genannten Testvorrichtung.

Zur Früherkennung von Bränden werden häufig CO-Gasalarmmelder installiert, welch das bei Schwelbränden entstehende Kohlenmonoxid (CO) detektieren. Diese CO-Gasalarmmelder müssen periodisch auf ihre Funktionstüchtigkeit mit dem entsprechenden Gas geprüft werden, nur rein elektronische Tests der Gasalarmmelder werden von den Sicherheitsbehörden häufig nicht mehr akzeptiert. Da derzeit schon eine sehr große Zahl solcher Gasalarmmelder in unterschiedlichsten Ausführungsformen verwendet wird, ist es erforderlich, ein geeignetes für alle Gasalarmmelder brauchbares Verfahren zu verwenden, so dass diese verschiedenen Gasalarmmelder einfach und kostengünstig kontrolliert werden können. Analoges gilt auch für Gasalarmmelder und Gassensoren, die andere Gase als CO detektieren und vor diesen anderen Gasen warnen können.

Gasalarmmelder und Gassensoren werden typischerweise auf ihre Funktion hin überprüft, indem eine Testgasmischung auf den Gasalarmmelder bzw. den Gassensor des Gasalarmmelders geleitet wird. Diese Testgasmischung kann in einer üblichen Niederdruck-Aluminiumdose enthalten sein und unter einem Überdruck von maximal 10 bar bei +23°C stehen. Höhere Drücke sind nicht zulässig, da Standard-Niederdruck-Aluminiumdosen bei +50°C nur für einen maximalen Druck von 11 bar Überdruck zugelassen sind und dieser Überdruck erreicht wird, wenn die Dose mit 10 bar Überdruck von +23°C auf +50°C erwärmt wird. Solche Standard-Niederdruck-Aluminiumdosen mit einem Inhalt von 350 ml können für ca. 30 bis 40 Testvorgänge eingesetzt werden. Danach sind die Dosen zumindest annähernd vollständig entleert. Im Verlauf dieser Testvorgänge sinkt dabei der Druck durch den sequentiellen Verbrauch der Testgasmischung laufend. Mit jedem Test eines Gasalarmmelders wird also jedes Mal weniger Testgasmischung freigesetzt und durch die Vermischung mit der Umgebungsluft wird der Gasalarmmelder also jedes Mal mit einer kleineren Konzentration des Zielgases beaufschlagt, welches die testweise Gasreaktion auslösen soll. Eine eindeutige Funktionsüberprüfung wird dadurch erheblich erschwert.

Dieser Effekt könnte teilweise dadurch behoben werden, indem man bei jedem folgenden Testvorgang die Testgasmischung im Vergleich zu dem vorangegangenen Testvorgang länger ausströmen lässt, um im Ergebnis die gleiche Menge an Zielgas und damit die gleiche Zielgaskonzentration im Erfassungsbereich des Gasalarmmelders zu erzeugen. Diese Art der Kompensation ist aber in der Praxis nicht möglich, da eine Testperson typischerweise nicht weiß, welcher Druck gegenwärtig in der betreffenden Dose herrscht und wie lange man in diesem Fall die das Zielgas enthaltende Testgasmischung ausströmen lassen sollte.

Eine andere Möglichkeit, diesen Missstand zu beheben, besteht darin, dass statt Standard-Niederdruck-Aluminiumdosen sehr große Niederdruck-Dosen mit 2 bis 5 Litern Inhalt verwendet werden, die ein einfaches Druckregelventil enthalten. Die Testgasmischung wird dann mit einem etwa konstanten Ausgangsdruck während einer Zeitspanne von bis zu 60 Sekunden über den Gasalarmmelder geblasen. Dabei stellt sich eine stationäre Konzentration des Zielgases ein und jeder Testvorgang kann mit derselben Zielgaskonzentration erfolgen. Da in diesem Fall aber eine viel größere Menge an Testgasmischung verbraucht wird, können damit aber auch nur maximal ca. 40 Tests pro Dose durchgeführt werden. Diese Möglichkeit hat jedoch den Nachteil, dass nicht mehr die kostengünstigen Standard-Niederdruck-Aluminiumdosen verwendet werden können, dass ein Druckregelventil nötig ist und dass die Handhabung der ganzen Apparatur mit einer Dose mit bis zu 5 Litern Inhalt sehr schwerfällig wird. Zu bedenken ist außerdem, dass Gasalarmmelder häufig in Höhen von bis zu 5m über Boden installiert werden, so dass die Handhabung derartiger Apparaturen zusätzlich erschwert wird.

Es wird darauf hingewiesen, dass die Verwendung von bekannten Hochdruckgasflaschen, welche die Testgasmischung unter einem Druck von bis zu 200 bar enthalten, noch größere Gewichtsprobleme verursachen würde. Auch wenn mit derartigen Hochdruckgasflaschen mehrere Hundert Testvorgänge durchgeführt werden könnten, ist die Verwendung infolge der schweren Handhabbarkeit und auch infolge der hohen Kosten nicht oder nur in Ausnahmefällen sinnvoll.

Aus der GB 2427480 A ist eine Anordnung bekannt, welche einen elektrochemischen Gassensor und einen elektrochemischen Gasgenerator aufweist, der über ein Rohr mit dem elektrochemischen Gassensor pneumatisch gekoppelt ist. Im Gasgenerator wird ein Gas elektrochemisch erzeugt, indem eine wässerige Flüssigkeit durch elektrischen Strom chemisch zerlegt wird. Das dabei erzeugt Gas ist das vom Gassensor im Rahmen einer Funktionsüberprüfung nachzuweisende Zielgas. Die Nachteile dieser Anordnung bestehen insbesondere darin, dass nur sehr wenige Gase wie Wasserstoff, Sauerstoff und Ammoniak aus einer Flüssigkeit elektrochemisch erzeugt werden können. Außerdem benötigt diese Anordnung einen Flüssigkeitsbehälter, der nur in einer bestimmten Lage funktioniert. Ferner kann die wässerige Lösung austrocknen, so dass die gesamte Anordnung überhaupt nicht mehr funktioniert.

Aus der WO 2008/082934 A1 ist ein Verfahren zum Überprüfen der Funktionsfähigkeit eines Gasalarmmelders bekannt, wobei eine Flüssigkeit verdampft oder eine Flüssigkeit mit einer zweiten Substanz zu einer chemischen Reaktion gebracht wird und dadurch ein vom Gasalarmmelder nachzuweisendes Zielgas erzeugt wird. Dieses Zielgas bzw. der Dampf der verdampften Flüssigkeit gelangt über eine gasdurchlässige Membrane zu dem Gassensor des Gasalarmmelders und erzeugt dort die gewünschte Gaskonzentration zur Funktionsüberprüfung des Gassensors. Dieses Verfahren hat den Nachteil, dass ein Flüssigkeitstank nötig, eine Pumpe und eine elektrische Heizung notwendig sind, um die Flüssigkeit zu verdampfen. Damit wird eine entsprechende Anordnung, mit der das Verfahren durchführbar ist, apparative sehr aufwändig.

Aus der DE 19708052 A1 ist eine Testkammer zum Kalibrieren von Gassensoren bekannt. An die Testkammer ist eine Vielzahl von Ampullen angeschlossen, die mit einem nachzuweisenden Zielgas gefüllt sind. Die Ampullen können durch Ventile oder Sprengdrähte elektrisch geöffnet werden und setzen so eine definierte Menge an Zielgas frei. Dadurch wird eine bestimmte Konzentration an Zielgas in der Testkammer erzeugt und der darin befindliche Gassensor kann kalibriert werden. Die beschriebene Testkammer hat den Nachteil, dass ihr mechanischer Aufbau sehr kompliziert ist.

Der Erfindung liegt die Aufgabe zugrunde, die Überprüfung der Funktionsfähigkeit eines Gasalarmmelders dahingehend zu verbessern, dass mit einer Testvorrichtung eine möglichst große Anzahl an Testvorgängen bei einer konstanter Ausströmzeit der Testgasmischung und einer möglichst gleichbleibenden Menge an bereit gestelltem Zielgas bereitgestellt werden kann. Die Überprüfung soll dabei sowohl für verschiedene Arten von Gasalarmmeldern, die bereits seit ggf. längerer Zeit im Einsatz sind, möglich sein.

Diese Aufgabe wird gelöst durch die Gegenstände der unabhängigen Patentansprüche. Vorteilhafte Ausführungsformen der vorliegenden Erfindung sind in den abhängigen Ansprüchen beschrieben.

Gemäß einem ersten Aspekt der Erfindung wird eine Testvorrichtung zum Überprüfen der Funktionsfähigkeit eines Gasalarmmelders beschrieben. Die beschriebene Testvorrichtung weist auf (a) einen Vorratsbehälter, in welchem sich ein Zielfluid und ein Trägerfluid befinden, wobei zumindest ein Teil des Trägerfluids in einem flüssigen Aggregatszustand vorliegt, und wobei das Zielfluid zumindest teilweise in dem flüssigen Trägerfluid gelöst ist, und (b) eine Entnahmeeinrichtung, welche derart in den Vorratsbehälter eingreift, dass das Zielfluid zusammen mit dem flüssigen Trägerfluid entnehmbar ist, wobei das Zielfluid derart beschaffen ist, das es, wenn es in einen Erfassungsbereich eines funktionsbereiten Gasalarmmelders gelangt, eine Alarmmeldung durch den Gasalarmmelder veranlasst.

Der beschriebenen Testvorrichtung liegt die Erkenntnis zugrunde, dass das Zielfluid auf vorteilhafte Weise in gelöster Form in einem Trägerfluid gespeichert werden kann. Das Trägerfluid kann dabei ein bestimmtes Fluid oder auch eine Mischung aus zwei oder sogar mehreren Fluiden sein.

Unter einem Fluid ist in diesem Zusammenhang eine Substanz zu verstehen, welche einer beliebig kleinen Scherspannung keinen Widerstand entgegensetzt. In diesem Sinne sind deshalb insbesondere Gase oder auch Flüssigkeiten Fluide.

Das Trägerfluid ist insbesondere bei normalen Raumbedingungen wie beispielsweise einem Druck von ca. 1013 hPa und einer Temperatur von 20°Celsius (°C) gasförmig. Unter einem erhöhten Druck von typischerweise bis zu 5 bis 6 bar kann das Trägerfluid flüssig werden. In der dadurch entstehenden Trägerflüssigkeit kann das Zielfluid dann physikalisch und/oder chemisch gelöst sein.

Das gelöste Zielfluid ist im dem flüssigen Trägerfluid in flüssiger Form gespeichert, so dass im Vergleich zu bekannten Testvorrichtungen, bei denen das Zielfluid in der gasförmigen Phase in einem Niederdruckbehälter gespeichert ist, eine viel größere Zahl von Testvorgängen durchgeführt werden kann. Da bei der erfindungsgemäßen Testvorrichtung das Zielfluid zusammen mit dem Trägerfluid in flüssiger Form aus dem Vorratsbehälter entnommen wird, kann die ausströmende Menge deutlich besser dosiert werden als bei einer Entnahme des Zielfluids in gasförmiger Form. Durch eine einfache Steuerung der Ausströmzeit kann somit pro Test immer ungefähr dieselbe Menge an Zielfluid entnommen werden. Damit kann eine Vielzahl von Testprozeduren mit jeweils einer zumindest annähernd gleichen Konzentration des Zielfluides durchgeführt werden, welches dann im Erfassungsbereich des zu überprüfenden Gasalarmmelders gasförmig ist bzw. gasförmig wird.

Es wird darauf hingewiesen, dass bei der Entnahme des Zielfluids aus der erfindungsgemäßen Testvorrichtung und der darauffolgenden Applikation in den Erfassungsbereich des Gasalarmmelders die eigentliche Testgasmischung erst durch eine Vermischung des in den gasförmigen Zustand übergeführten Zielfluids mit der Umgebungsluft entsteht. Damit kann durch eine einfache Steuerung der Entnahmemenge des flüssigen Gemisches aus Zielfluid und Trägerfluid bei jedem Test die Konzentration des Zielfluids zumindest annähernd gleich gehalten werden.

Eine besonders zuverlässige Überprüfung des Gasalarmmelders ist dann möglich, wenn das Trägerfluid, welches auch eine Mischung aus verschiedenen Fluiden sein kann, folgende Eigenschaften aufweist:
1. Das Trägerfluid sollte bei Raumtemperatur und einem Druck von fünf bis sechs bar im flüssigen Aggregatszustand vorliegen.
2. Das Trägerfluid sollte den Nachweis des gasförmigen Zielfluids im Gasmelder weder chemisch noch physikalisch beeinflussen.
3. Das Trägerfluid darf nicht mit dem Zielfluid chemisch reagieren.
4. Das Zielfluid muss in dem Trägerfluid lösbar sein.

Sofern diese Voraussetzungen erfüllt sind, kann die gesamte Fluidmischung, welche das Trägerfluid und das Zielfluid aufweist, auf vorteilhafte Weise in kostengünstigen Standard-Niederdruck-Aluminiumdosen mit einem Volumen von ca. 350 ml gespeichert werden.

Anschaulich gesprochen wird erfindungsgemäß zum Testen eines Gasalarmmelders eine Fluidmischung verwendet, welche das Zielfluid und ein zweites Fluid oder eine Fluidmischung enthält. Das zweite Fluid oder die zweite Fluidmischung ist bevorzugt eine Substanz, welche im Wesentlichen keinen Sauerstoff (02) und/oder keinen Stickstoff (N2) aufweist, bei +25°C einen Dampfdruck von mehr als einem bar und weniger als beispielsweise 8 bar hat und den Nachweis des Zielgases nicht verunmöglicht. Die gesamte Fluidmischung kann jedoch noch kleine Anteile von 02 oder N2 in der Größenordnung von bis zu 2 Volumenprozent enthalten.

Im Folgenden werden noch einige Begriffe erläutert, die in dieser Anmeldung verwendet werden:
- Ein Zielfluid bzw. ein Zielgas ist eine Substanz, welche von dem Gasalarmmelder bzw. dem Gassensor des Gasalarmmelders erfasst wird. Über- oder unterschreitet die Konzentration des Zielfluid bestimmte Werte, so löst der Gasalarmmelder eine entsprechende Aktion aus.
- Eine Testfluidmischung bzw. eine Testgasmischung ist eine Mischung aus dem Zielfluid bzw. dem Zielgas und weiteren Fluiden bzw. Gasen, welche den Nachweis des Zielfluids bzw. des Zielgases nicht beeinträchtigen. Diese weiteren Fluide bzw. Gase können beispielsweise Sauerstoff und Stickstoff (=Luft) oder Stickstoff sein sowie Luft und die unten erwähnten Trägerfluide.
- Zur Kontrolle der Funktionstüchtigkeit des Gasalarmmelders bzw. des Gassensors des Gasalarmmelders wird die Testfluidmischung bzw. die Testgasmischung auf dem entsprechendem Gassensor appliziert. Der betreffende Gasalarmmelder muss dann eine vorgegebene Reaktion zeigen, durch welche sichergestellt werden kann, dass der Gasalarmmelder richtig funktioniert.
- Ein Test ist ein Testvorgang des Gasalarmmelders, bei dem der entsprechende Gassensor mit der Testfluidmischung bzw. der Testgasmischung beaufschlagt wird.
- Das Trägerfluid bzw. das Trägergas ist ein Fluid oder ein Gas oder ein Gemisch aus zumindest einem Fluid oder Gas, welche das Zielfluid bzw. das Zielgas nicht enthalten. Die Trägerfluide bzw. Trägergase enthalten typischerweise weder Luft noch Stickstoff.
- Die gesamte Fluidmischung bzw. die gesamte Gasmischung ist eine Mischung von Zielfluid bzw. Zielgas mit dem Trägerfluid bzw. dem Trägergas. Im gasförmigen Zustand stellt die gesamte Fluidmischung bzw. die gesamte Gasmischung zusammen mit der Umgebungsluft die eigentliche Testfluidmischung bzw. eine Testgasmischung dar.
   Gemäß einem Ausführungsbeispiel der Erfindung bilden das Trägerfluid und das Zielfluid eine Testfluidmischung, welche in dem Vorratsbehälter teilweise in der flüssigen Phase und teilweise in der gasförmigen Phase vorliegt.
   Die gleichzeitige Präsenz einer flüssigen und einer gasförmigen Phase innerhalb des Vorratsbehälters hat den Vorteil, dass sich bei einer gezielten Entnahme von flüssiger Testfluidmischung der gasförmige Teil der Testfluidmischung ausdehnen kann. Damit kann auch bei einer Entnahme einer Mehrzahl von jeweils kleinen Mengen an flüssiger Testgasmischung ein weitgehend gleichmäßiger Druck im Inneren des Vorratsbehälters aufrecht erhalten werden. Dies hat den Vorteil, dass in der Praxis die pro Testentnahme entnommene Menge an flüssigem Testfluid auch bei einer Vielzahl von Testentnahmen nur unwesentlich geringer wird.
   Gemäß einem weiteren Ausführungsbeispiel der Erfindung weist die Entnahmeeinrichtung ein Steigrohr mit einem ersten Ende und einem zweiten Ende auf, wobei sich das erste Ende innerhalb der flüssigen Phase der Testfluidmischung befindet und wobei an dem zweiten Ende ein Entnahmeventil zum Entnehmen der flüssigen Testfluidmischung angebracht ist. Durch die beschriebene Verwendung eines Steigrohres, dessen erstes und typischerweise unten liegendes Ende vollständig in die flüssige Testfluidmischung eingetaucht ist, kann sichergestellt werden, dass lediglich die flüssige Phase der Testfluidmischung entnommen wird. Im Verlauf einer kurzen Entnahme der Testfluidmischung durch eine kurze Öffnung des Entnahmeventils sorgt die gasförmige Phase für den notwendigen Druck, so dass die flüssige Testfluidmischung durch das Steigrohr strömt. Selbstverständlich ist es dazu erforderlich, dass der Vorratsbehälter so dicht ist, dass sich in diesem ein entsprechender Druck aufbauen kann.
   Gemäß einem weiteren Ausführungsbeispiel der Erfindung beträgt die Konzentration des Zielfluids in der flüssigen Phase der Testfluidmischung zwischen 1 ppm und 10000 ppm.
   Je nach Anwendungsfall, d.h. insbesondere in Abhängigkeit der verwendeten Substanzen für Trägerfluid und Zielfluid kann für die beschriebene Testvorrichtung eine optimale Konzentration des Zielfluids gewählt werden. Diese Konzentration kann dabei beispielsweise von der Löslichkeit des Zielfluids im Trägerfluid abhängen.
   Gemäß einem weiteren Ausführungsbeispiel der Erfindung enthält das Trägerfluid zumindest eine der folgenden Substanzen: Propan, n-Butan, iso-Butan, Dimethyläther oder 1,1,1,2-Tetrafluorethan. Diese Substanzen, welche auch in beliebigen Mischungsverhältnissen verwendet werden können, haben den Vorteil, dass sie einfach zu handhaben sind und hinsichtlich einer möglichen Umweltgefährdung weitgehend unbedenklich sind.
   Derzeit erscheint insbesondere die Substanz Propan als besonderes geeignet für die Herstellung einer gesamten Fluidmischung, welche Kohlenmonoxid (CO) als Zielfluid aufweist und welche zusammen mit der Umgebungsluft des zu überprüfenden Gasalarmmelders die Testfluidmischung bzw. die Testgasmischung erzeugt, mit der ein CO-Gasalarmmelder auf seine Funktionsfähigkeit überprüft werden kann.
   Gemäß einem weiteren Ausführungsbeispiel der Erfindung enthält das Zielfluid zumindest eine der folgenden Substanzen: Kohlenmonoxid, Kohlendioxid, Äthanol, Ammoniak. Auch diese Substanzen können in beliebigen Mischungsverhältnissen verwendet werden.
   Es wird darauf hingewiesen, dass diese Aufzählung nicht abschließend ist und dass auch noch andere Gase als Zielfluid verwendet werden können.
   Die Nachweismethode an dem Gassensor des zu überprüfenden Gasalarmmelders kann auf einer elektrochemischen Reaktion, auf einer optischen Messung und/oder einer opto-akustischen Messung beruhen. Auch hier können ggf. noch andere hier nicht explizit aufgeführte Nachweismethoden verwendet werden.
   Gemäß einem weiteren Ausführungsbeispiel der Erfindung befindet sich in dem Vorratsbehälter ferner ein Aerosolbildner. Dies hat den Vorteil, dass mit der beschriebenen Testvorrichtung nicht nur ein Gasalarmmelder sondern beispielsweise auch ein optischer nach dem bekannten Streulichtverfahren arbeitender Rauchmelder auf seine Funktionsfähigkeit hin überprüft werden kann. Dabei dienen die Aerosole, die bei einer Applikation der zunächst noch flüssigen Testfluidmischung im Erfassungsbereich des optischen Rauchmelders freigesetzt werden, als Streupartikel.
   Im Falle der zusätzlichen Verwendung eines Aerosolbildners kann sich beim Ausströmen der gesamten Fluidmischung somit ein Aerosol bilden, welches einen Rauchmelder testweise in Alarm versetzen kann. Damit kann einerseits der Gasalarmmelder, andererseits aber auch ein Rauchsensor im Gasalarmmelder auf seine Funktionsfähigkeit hin geprüft werden. Anders ausgedrückt bedeutet dies, dass die beschriebene Testvorrichtung auf besonders vorteilhafte Weise auch für einen sog. Kombinations-Gefahrenmelder verwendet werden kann, welcher sowohl einen Gassensor als auch einen optischen Streulichtsensor aufweist.
   Der Test eines Gasalarmmelders mit einem integrierten Rauchsensor kann beispielsweise so durchgeführt werden, dass die flüssige Phase der gesamten Fluidmischung während einer sehr kurzen Zeit auf den Gasalarmmelder bzw. auf einen Gassensor des Gasalarmmelders gesprüht wird und die Fluidmischung bzw. die daraus resultierenden Gasmischung über eine längere Zeit in der Umgebung des Gasalarmmelders gehalten wird. Dies kann beispielsweise durch beliebige mechanische Barrieren erfolgen, die zwischen der Testvorrichtung und dem Gasalarmmelder einen von der sonstigen Umgebung abgetrennten Testraum definieren.
   Gemäß einem weiteren Ausführungsbeispiel der Erfindung enthält der Aerosolbildner zumindest eine der folgenden Substanzen: Sebazinsäure-bis-2-ethylhexylester, Sebazinsäure-diester mit diversen Estergruppen, Phthalsäure-dibutylester, Phthalsäure-bis-ethylhexylester. Auch diese Substanzen können in beliebigen Mischungsverhältnissen untereinander und/oder in Bezug auf die gesamte in dem Vorratsbehälter befindliche Testfluidmischung verwendet werden.
   Der Anteil des Aerosolbildners in der flüssigen Phase der gesamten Gasmischung kann beispielsweise weniger als oder auch gleich 2,0% Gewichtsprozent betragen. Bevorzugt beträgt der Anteil des Aerosolbildners weniger als oder auch gleich 0,5% Gewichtsprozent. Insbesondere erscheint derzeit eine Konzentration des Aerosolbildners im Bereich zwischen 0,001 und 0,3 Gewichtsprozent als besonders geeignet, um sowohl eine zuverlässige Funktionsüberprüfung eines Gassensors als auch eine zuverlässige Funktionsüberprüfung eines optischen Rauchmelders zu gewährleisten.
   Gemäß einem weiteren Ausführungsbeispiel der Erfindung befindet sich in dem Vorratsbehälter ferner ein Aromastoff.
   Die zusätzliche Verwendung eines riechenden Aromastoffes ist insbesondere dann von Vorteil, wenn die gesamte Fluidmischung, d.h. die Mischung aus dem Trägerfluid, aus dem Zielfluid und ggf. aus dem Aerosolbildner geruchlos ist und beispielsweise gefährliche Stoffe enthält. Gefährliche Stoffen können beispielsweise giftige und/oder brennbare Stoffe sein. Durch die Beigabe eines deutlich riechenden Aromastoffes zu der gesamten Testfluidmischung kann somit gewährleistet werden, dass eine Person die Anwesenheit der Testfluidmischung mit ihrem Geruchssinn wahrnimmt. Dadurch kann beispielsweise ein Anwender der beschriebenen Testvorrichtung auf das Vorhandensein der giftigen Testfluidmischung aufmerksam gemacht werden, so dass der Anwender geeignete Gegenmaßnahmen zur Gefahrenabwehr wie beispielsweise ein Lüften oder ein Verlassen eines Raumes einleiten kann.
   Als Aromastoffe sind alle Substanzen geeignet, die bei kleinster Konzentration stark riechen und dabei nicht giftig sind. Beispiele für solche Aromastoffe sind Mercaptane, Acrylate, Pyrazine und/oder Naturstoffe wie beispielsweise ein Wasabi-Extrakt, etc.
   Gemäß einem weiteren Aspekt der Erfindung wird ein Testsystem zum Überprüfen der Funktionsfähigkeit eines Gasalarmmelders beschrieben. Das Testsystem weist auf (a) eine Testvorrichtung des oben beschriebenen Typs, (b) eine Halteeinrichtung zum Aufnehmen der Testvorrichtung und (c) ein Abdeckungselement, welches an der Halteeinrichtung angebracht ist und welches derart ausgebildet ist, dass zwischen der aufgenommenen Testvorrichtung und einem Gassensor des Gasalarmmelders ein Testraum zumindest annähernd von der Umgebung des Gasalarmmelders räumlich abtrennbar ist.
   Dem beschriebenen Testsystem liegt die Erkenntnis zugrunde, dass bereits durch die Verwendung lediglich einer sehr geringen Menge an Trägerfluid und Zielfluid eine zuverlässige Funktionsüberprüfung des Gasalarmmelders vorgenommen werden kann, wenn ein Testraum geschaffen wird, welcher von der Umgebungsluft zumindest annähernd abgetrennt ist. Dadurch kann nämlich verhindert werden, dass sich die aus der flüssigen Fluidmischung entstehende Gasmischung räumlich frei ausbreitet, so dass sich im Ergebnis nur noch ein lediglich sehr kleiner Anteil der Gasmischung im Erfassungsbereich des Gassensors des Gasalarmmelders befindet. Mit anderen Worten, durch die Verhinderung der unbegrenzten räumlichen Ausbreitung der entstandenen Gasmischung kann die Effizienz der oben beschriebenen Testvorrichtung im Hinblick auf die für einen Testvorgang erforderliche Menge an Träger- und Zielfluid erheblich verbessert werden.
   Das Abdeckungselement kann beispielsweise ein elastischer Balg sein. Der Balg sollte dabei insbesondere an den Stellen, an der der Balg mit einer Wand oder einer Decke zusammenkommt, an welcher der Gasalarmmelder angebracht ist, so elastisch sein, dass Unebenheiten in der Oberfläche des Gasalarmmelders zumindest teilweise ausgeglichen werden. Außerdem können durch eine hohe Elastizität des Balges Beschädigungen am Gasalarmmelder vermieden werden.
   Das Abdeckungselement kann beispielsweise zumindest abschnittsweise eine kegelartige Form aufweisen. Dabei kann durch die Formgebung des Abdeckungselementes das Volumen des Testraumes genau vorgegeben sein.
   Gemäß einem weiteren Aspekt der Erfindung wird ein Testverfahren zum Überprüfen der Funktionsfähigkeit eines Gasalarmmelders unter Verwendung einer Testvorrichtung der oben beschriebenen Art beschrieben. Das Testverfahren weist auf
   (a) ein Einbringen des flüssigen Trägerfluids zusammen mit dem darin gelösten Zielfluid in den Erfassungsbereich des Gasalarmmelders, (b) ein Überprüfen der Funktionsfähigkeit des Gasalarmmelders, wobei der Gasalarmmelder als funktionsfähig klassifiziert wird, wenn von diesem eine Alarmmeldung ausgegeben wird, und wobei der Gasalarmmelder als nicht funktionsfähig klassifiziert wird, wenn von diesem keine Alarmmeldung ausgegeben wird.
   Dem beschriebenen Testverfahren liegt die Erkenntnis zugrunde, dass ein in einer flüssigen Phase des Trägerfluids gelöstes Zielfluid in den Erfassungsbereich des Gasalarmmelders transferiert werden kann. Auf dem Weg in den Erfassungsbereich und spätestens im Erfassungsbereich des Gasalarmmelders geht dann das Zielfluid in den gasförmigen Zustand über und kann eine Reaktion eines Gassensors des Gasalarmmelders auslösen.
   Der Test des Gasalarmmelders kann so durchgeführt werden, dass die flüssige Phase der gesamten Fluidmischung während lediglich einer sehr kurzen Zeit auf den Gasalarmmelder aufgesprüht wird. Um zu Verhindern, dass sich insbesondere das gasförmig gewordene Zielfluid aus dem Erfassungsbereich verflüchtigt, kann mittels einer geeigneten mechanischen Barriere das Zielfluid in der nahen Umgebung des Gasalarmmelders gehalten werden.
   Gemäß einem weiteren Aspekt der Erfindung wird ein Verfahren zum Herstellen einer Testvorrichtung der oben beschriebenen Typs angegeben. Das Herstellverfahren weist auf (a) ein Befüllen des Vorratsbehälters mit dem Trägerfluid, (b) ein Befüllen des Vorratsbehälters mit dem Zielfluid, und (c) ein Abdichten des befüllten Vorratsbehälters, so dass sich in dem Vorratsbehälter ein Überdruck aufbauen und/oder erhalten kann.
   Das Trägerfluid und das Zielfluid können dabei mittels eines gemeinsamen oder mittels zumindest zweier separater Befüllungsvorgänge in den Vorratsbehälter transferiert werden.
   Im Falle eines gemeinsamen Befüllungsvorgangs kann die gesamte Fluidmischung bzw. die gesamte Gasmischung in einem großen Tank gelagert und von dort in einen oder in mehrere Vorratsbehälter abgefüllt werde. Dabei kann noch etwas Luft (= 02 + N2) in dem oder in den Vorratsbehältern verbleiben, so dass auch die gesamte Fluid- bzw. Gasmischung noch etwas Luft enthalten wird.
   Der Vorratsbehälter kann jeder beliebige Behälter sein, in dem sich im Vergleich zu dem Umgebungsluftdruck ein gewisser Überdruck aufbauen oder erhalten kann. Durch diesen Überdruck kann die flüssige Phase der Fluid- bzw. Gasmischung auf einfache Weise beispielsweise durch ein Öffnen eines Ventils dosiert entnommen werden. Der Vorratsbehälter kann insbesondere eine ein fache Dose beispielsweise aus Aluminium oder Weißblech sein.
   Gemäß einem Ausführungsbeispiel der Erfindung weist das Verfahren zusätzlich ein Evakuieren des Vorratsbehälters auf, welches vor dem Befüllen mit dem Trägerfluid und dem Befüllen mit dem Zielfluid durchgeführt wird.
   Bevorzugt wird nach dem Evakuieren zunächst das Zielgas bis zu einem definierten Druck eingefüllt, damit sichergestellt wird, dass in dem Vorratsbehälter auch die notwendige Menge an Zielfluid vorhanden ist. Anschließend kann das Trägerfluid in den Vorratsbehälter gefüllt werden. Durch eine Mischung des Trägerfluids mit dem Zielfluid, welche Mischung typischerweise von selbst ablaufen wird, wird dann die Fluidmischung erzeugt.

Durch das Evakuieren des Vorratsbehälters kann auf vorteilhafte Weise erreicht werden, dass sich keine oder nur noch wenig Luft in dem Vorratsbehälter befindet, wenn das Trägerfluid und/oder das Zielfluid eingefüllt wird/werden.

Es wird darauf hingewiesen, dass anstelle der beschriebenen Vorab-Evakuierung des Vorratsbehälters und der nachfolgenden Befüllung des Vorratsbehälters zunächst mit dem reinen Zielfluid auch eine konzentrierte Mischung von Zielfluid mit einem inerten Gas wie z.B. Stickstoff bis auf einen bestimmten Druck in den Vorratsbehälter eingefüllt werden kann. Auch dadurch kann sichergestellt werden, dass in dem Vorratsbehälter auch tatsächlich die notwendige Menge an Zielfluid für die Ausbildung der gesamten Gasmischung in ausreichender Menge vorhanden ist. Anschließend wird dann das Trägerfluid, welches auch eine Mischung aus mehreren Fluiden sein kann, in den Vorratsbehälter gefüllt. Auch in diesem Fall kann noch etwas Luft (insbesondere Sauerstoff und Stickstoff) in dem Vorratsbehälter verbleiben, so dass auch die gesamte Fluidmischung noch etwas Luft enthalten wird.

Gemäß einem weiteren Ausführungsbeispiel der Erfindung weist das Verfahren zusätzlich auf ein Beaufschlagen des Vorratsbehälters mit einem inerten Gas mit Überdruck und ein Entleeren des Vorratsbehälters. Sowohl das Beaufschlagen mit Überdruck als auch das Entleeren erfolgt vor dem Befüllen mit dem Trägerfluid und dem Befüllen mit dem Zielfluid. Dies hat den Vorteil, dass zunächst in dem Vorratsbehälter befindliche Luft verdrängt wird. Um eine besonders gründliche Entfernung von sich in dem Vorratsbehälter befindlicher Luft zu gewährleisten, kann der beschriebene Vorgang des Beaufschlagens des Vorratsbehälters mit Überdruck und des Entleerens des Vorratsbehälters auch mehrmals hintereinander durchgeführt werden.

Das inerte Gas kann beispielsweise Stickstoff sein.

Nach dem Beaufschlagen des Vorratsbehälters mit Überdruck und dem Entleeren des Vorratsbehälters kann dann, wie bereits oben beschrieben, eine Menge an Zielfluid zugeführt werden, welche Menge so groß ist, dass in dem Vorratsbehälter die notwendige Menge an Zielfluid für die Ausbildung der gesamten Fluidmischung vorhanden ist. Anschließend wird das Trägerfluid, welches auch eine Mischung aus mehreren Fluiden sein kann, in den Vorratsbehälter abgefüllt, so dass sich die gesamte Fluidmischung ausbilden kann.

Es wird darauf hingewiesen, dass durch die oben beschriebenen Maßnahmen zur Reduzierung des Anteils an in dem Vorratsbehälter verbleibender Luft sichergestellt werden kann, dass sich in dem Vorratsbehälter keine explosionsfähigen Fluid- bzw. Gasmischungen bilden können. Somit können beispielsweise als Zielfluid bzw. als Zielgas und/oder Trägerfluid bzw. Trägergas auch brennbare Substanzen verwendet werden, ohne dass bei der Durchführung der oben beschriebenen Verfahren zum Herstellen einer Testvorrichtung eine Explosionsgefahr zu befürchten wäre.

Es wird darauf hingewiesen, dass Ausführungsformen der Erfindung mit Bezug auf unterschiedliche Erfindungsgegenstände beschrieben wurden. Insbesondere sind einige Ausführungsformen der Erfindung mit Vorrichtungsansprüchen und andere Ausführungsformen der Erfindung mit Verfahrensansprüchen beschrieben. Dem Fachmann wird jedoch bei der Lektüre dieser Anmeldung sofort klar werden, dass, sofern nicht explizit anders angegeben, zusätzlich zu einer Kombination von Merkmalen, die zu einem Typ von Erfindungsgegenstand gehören, auch eine beliebige Kombination von Merkmalen möglich ist, die zu unterschiedlichen Typen von Erfindungsgegenständen gehören.

Weitere Vorteile und Merkmale der vorliegenden Erfindung ergeben sich aus der folgenden beispielhaften Beschreibung derzeit bevorzugter Ausführungsformen. Die einzelnen Figuren der Zeichnung dieser Anmeldung sind lediglich als schematisch und als nicht maßstabsgetreu anzusehen.

Figur 1 zeigt eine Testvorrichtung zum Überprüfen der Funktionsfähigkeit eines Gasalarmmelders.

Figur 2 zeigt ein Testsystem zum Überprüfen der Funktionsfähigkeit eines Gasalarmmelders, welches eine einen Testraum definierende Haube und die in Figur 1 dargestellte Testvorrichtung aufweist, die sich in einer Halterung befindet.

Die Figuren 3a und 3b zeigen in einer schematischen Übersicht den apparativen und den funktionellen Unterschied zwischen einer bekannten Testvorrichtung, bei der ein Zielfluid lediglich in der gasförmigen Phase gespeichert ist, und der in Figur 1 dargestellten Testvorrichtung, bei der das Zielfluid in einer flüssigen Phase eines Trägerfluids gelöst ist.

Figur 4 zeigt ein IR-Absorptionsspektrum zum Bestimmen der Konzentration von Kohlenmonoxid in einer Testfluidmischung.

Figur 5 zeigt ein Diagramm, in dem die relative Menge des Zielgases Kohlenmonoxid dargestellt ist in Abhängigkeit von der Anzahl an vorgenommenen Testvorgängen für eine neue Testmethode mit einer in dieser Anmeldung beschriebenen Testvorrichtung und für zwei bekannte Testmethoden mit jeweils einer bekannten Testvorrichtung.

Figur 6 zeigt ein Diagramm, in dem als Funktion der Zeit das Ausgangssignal eines Kohlenmonoxid-Gassensors bei einem Funktionstest mit der in Figur 1 dargestellten Testvorrichtung aufgetragen ist.

Figur 7 zeigt ein Diagramm, in dem als Funktion der Zeit das Ausgangssignal eines Kohlenmonoxid-Gassensors und das Ausgangssignal eines optischen Rauchsensors bei einem Funktionstest aufgetragen ist, bei dem eine Testgasmischung mit dem Zielgas Kohlenmonoxid und mit einem Aerosolbildner verwendet wird.

An dieser Stelle wird darauf hingewiesen, dass sich in der Zeichnung die Bezugszeichen von gleichen oder von einander entsprechenden Komponenten lediglich in ihrer ersten Ziffer voneinander unterscheiden.

Ferner wird darauf hingewiesen, dass die nachfolgend beschriebenen Ausführungsformen lediglich eine beschränkte Auswahl an möglichen Ausführungsvarianten der Erfindung darstellen. Insbesondere ist es möglich, die Merkmale einzelner Ausführungsformen in geeigneter Weise miteinander zu kombinieren, so dass für den Fachmann mit den hier explizit dargestellten Ausführungsvarianten eine Vielzahl von verschiedenen Ausführungsformen als offensichtlich offenbart anzusehen sind.

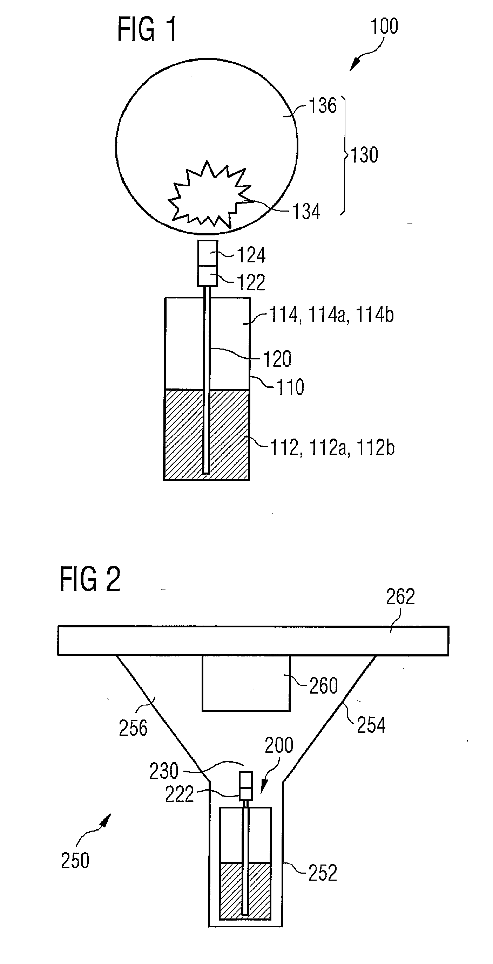

Figur 1 zeigt eine Testvorrichtung 100 zum Überprüfen der Funktionsfähigkeit eines Gasalarmmelders. Die Testvorrichtung 100 weist einen Vorratsbehälter auf, in dem eine sich in der flüssigen Phase befindliche Fluidmischung 112 und eine sich in der gasförmigen Phase befindliche Fluidmischung 114 befinden. Gemäß dem hier dargestellten Ausführungsbeispiel ist der Vorratsbehälter eine Dose 110, welche beispielsweise aus dem Material Aluminium hergestellt worden ist. Derartige Standard-Niederdruck-Aluminiumdosen sind beispielsweise für einen Innendruck von bis zu 11 bar ausgelegt.

Die sich in der flüssigen Phase befindliche Fluidmischung 112 enthält ein flüssiges Trägerfluid 112a und ein Zielfluid 112b, welches in dem flüssigen Trägerfluid 112a gelöst ist. Entsprechend enthält die sich in der gasförmigen Phase befindliche Fluidmischung 114 ein gasförmiges Trägerfluid 114a und ein damit vermischtes gasförmiges Zielfluid 114b. Gemäß dem hier dargestellten Ausführungsbeispiel ist das Zielfluid 112b, 114b Kohlenmonoxid. Das Trägerfluid 112a, 114a kann Propan, n-Butan, iso-Butan, Dimethyläther und/oder 1,1,1,2-Tetrafluorethan aufweisen.

Der Vorratsbehälter 110 enthält somit die flüssige Phase 112 und die gasförmige Phase 114 der gesamten Gasmischung. Damit bildet sich innerhalb des Vorratsbehälters 110 ein bestimmter Innendruck aus, der neben dem Dampfdruck der beteiligten Fluide auch von der Temperatur abhängt.

Wie aus Figur 1 ersichtlich, weist die Testvorrichtung 100 außerdem ein Steigrohr 120 auf, dessen unteres Ende sich vollständig in der flüssigen Phase 112 der Fluidmischung 112 befindet. An dem entgegengesetzten oberen Ende des Steigrohrs 120 befindet sich ein Ventil 122. Bei einem Öffnen des Ventils 122 sorgt der Innendruck im Vorratsbehälter 110 dafür, dass die flüssige Fluidmischung 112 in dem Steigrohr 120 aufsteigt, das Ventil passiert und über eine Düse 124 freigesetzt wird. Die freigesetzte Fluidmischung wird bei einem üblichen Umgebungsdruck von ungefähr 1 bar schnell in die gasförmige Phase übergehen. Die in die gasförmige Phase übergegangene Fluidmischung, welche sowohl das Zielfluid als auch das Trägerfluid aufweist, ist in Figur 1 mit dem Bezugszeichen 134 gekennzeichnet. Die gasförmige Fluidmischung 134 wird sich dann mit der Umgebungsluft 136 vermischen und dadurch die eigentliche Testgasmischung 130 bilden.

Figur 2 zeigt ein Testsystem 250 zum Überprüfen der Funktionsfähigkeit eines Gasalarmmelders 260, welcher an einer Decke 262 eines zu überwachenden Raumes angebracht ist. Das Testsystem 250 weist eine Testvorrichtung 200 auf, die sich in einer schematisch dargestellten Halterung 252 des Testsystems 250 befindet. Gemäß dem hier dargestellten Ausführungsbeispiel ist die Testvorrichtung 200 identisch mit der in Figur 1 dargestellten Testvorrichtung 100.

Das Testsystem 250 weist ferner eine Haube 254 auf, welche zusammen mit der Decke 262 einen Testraum 256 definiert. Wie aus Figur 2 ersichtlich, ist der Testraum 256 von der sonstigen Umgebung des Gasalarmmelders 260 abgetrennt. Während des Testvorgangs wird die Haube 254 über den zu überprüfenden Gasalarmmelder 260 gestülpt, so dass sich dieser innerhalb des Testraumes 256 befindet.

Zum Testen des Gasalarmmelders 260 befindet sich die Testvorrichtung 200 somit in der Halterung 252. An der Halterung ist die Haube 254 angebracht, welche gemäß dem hier dargestellten Ausführungsbeispiel ein nach oben offener, etwas beweglicher Balg 254 ist. Der Balg 254 wird über den Gasalarmmelder 260 geschoben und schliesst einigermassen dicht mit der Decke 262 ab. Nun wird das Ventil 222 für einen Zeitraum von beispielsweise 0,5 bis 1 Sekunde betätigt, so dass sich die Testgasmischung 230 in dem Testraum 256 verteilt. Der Gasalarmmelder 260 wird somit mit der Testgasmischung 230 beaufschlagt.

Innerhalb dieser Zeitspanne werden die Halterung 252 und der Balg 254 relativ lange (beispielsweise mindestens 30 Sekunden) nicht bewegt. Die Zeitspanne, innerhalb der das Testsystem 250 bzw. die Haube 254 über den Gasalarmmelder 260 übergestülpt ist und innerhalb der der eigentliche Testvorgang durchgeführt wird, ist relativ lang im Vergleich zu der Zeit, während der das Ventil 222 geöffnet wird. Falls der Gasalarmmelder 260 innerhalb dieser Zeitspanne eine Alarmmeldung abgibt, so wird er als funktionstüchtig klassifiziert, falls dies nicht der Fall ist, dann muss der Gasalarmmelder 260 genauer untersucht werden.

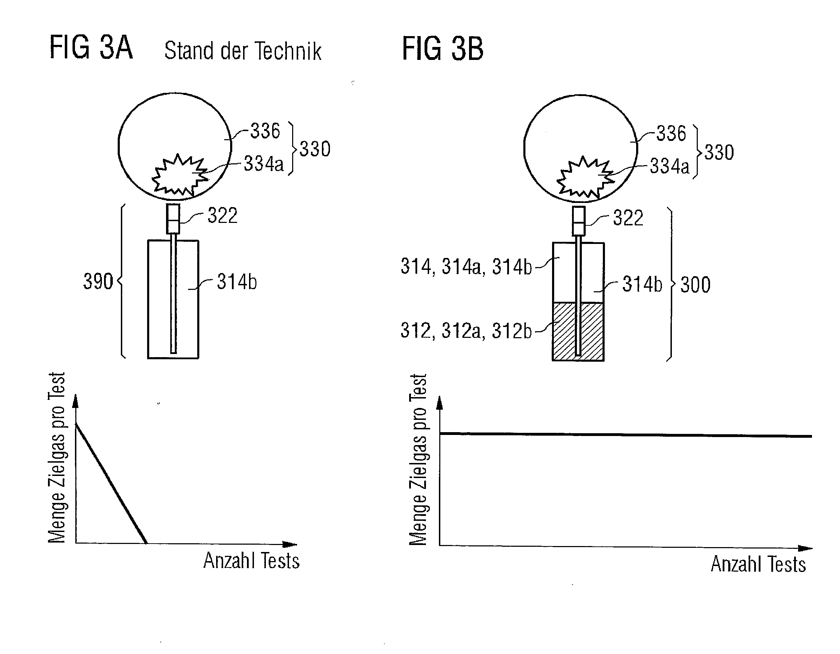

Die Figuren 3a und 3b zeigen in einer schematischen Übersicht den apparativen und den funktionellen Unterschied zwischen einer bekannten Testvorrichtung 390, bei der ein Zielfluid 314b lediglich in der gasförmigen Phase gespeichert ist, und der bereits in Figur 1 dargestellten Testvorrichtung 100, 300, bei der das Zielfluid 312b zumindest teilweise in einer flüssigen Phase eines Trägerfluids 312a gelöst ist. In der Testvorrichtung 300 bildet die flüssige Phase des Trägerfluids 312a zusammen mit dem gelösten Zielfluid 312b die flüssige Phase der Fluidmischung 312. Wie bereits oben erläutert, sorgt der Dampfdruck der Fluidmischung 312 dafür, dass sich in der Testvorrichtung 300 auch noch eine gasförmige Fluidmischung 314 befindet, welche das gasförmige Trägerfluid 314a und das gasförmige Zielfluid 314b aufweist.

Die bekannte Testvorrichtung 390 stellt bei einer Betätigung eines Ventils 322 unmittelbar ein gasförmiges Zielfluid 334a bereit, welches sich mit der Umgebungsluft zu einem Testgasgemisch 330 vermischt. Die in dieser Anmeldung beschriebene Testvorrichtung 300 stellt bei einer Betätigung des Ventils 322 zunächst eine flüssige Fluidmischung bereit. Diese verdampft infolge des im Vergleich zum Innendruck in der Testvorrichtung 300 deutlich reduzierten Umgebungsdrucks sehr schnell, so dass im Ergebnis bereits nach kurzer Zeit eine gasförmige Fluidmischung 334 vorliegt, die sich zusammen mit der Umgebungsluft ebenfalls zu einem Testgasgemisch 330 vermischt.

Unten in den Figuren 3a und 3b ist jeweils ein Koordinatensystem dargestellt, in dem für die Testvorrichtung 390 und für die Testvorrichtung 300 die relative Menge an Zielfluid bzw. Zielgas als Funktion der Anzahl der mit der jeweiligen Testvorrichtung 390, 300 bereits vorgenommenen Testvorgänge aufgetragen ist. Wie in diesen Graphen schematisch dargestellt, nimmt die relative Menge an Zielgas pro Testvorgang bei der bekannten Testvorrichtung 390 sehr schnell ab. Bei der Testvorrichtung 300 bleibt die relative Menge an Zielgas dagegen weitgehend konstant.

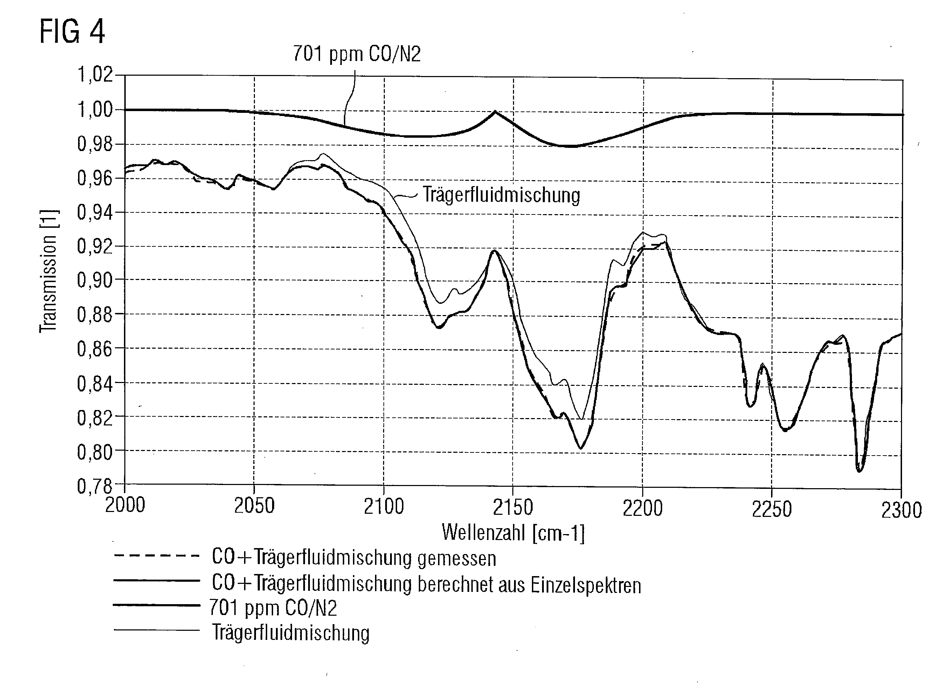

Um die oben beschriebenen Eigenschaften der beschriebenen Testvorrichtung zu erreichen, wurden von dem Erfinder eine Reihe von experimentellen Untersuchungen durchgeführt, welche nachfolgend anhand der Figuren 4, 5, 6 und 7 beschrieben werden.

Zunächst wurde nach einem für Kohlenmonoxid (CO) geeigneten Trägerfluid gesucht, welches folgende Eigenschaften hat:
(a) Das Trägerfluid ist bei Raumtemperatur und bei einem Überdruck von maximal 5 bis 6 bar flüssig.
(b) Das Trägerfluid darf den Nachweis des Zielgases CO im Gasmelder nicht beeinflussen.
(c) Das Trägerfluid darf mit dem Zielgas CO nicht chemisch reagieren.
(d) Das Zielgas muss in dem flüssigen Trägerfluid löslich sein.

Als mögliche Trägerfluide wurden deshalb aus praktischen und aus umweltrelevanten Gründen n-Butan, iso-Butan, Propan, Dimethyläther, 1,1,1,2-Tetrafluorethan oder beliebige Mischungen davon in Betracht gezogen.

Hinsichtlich der Löslichkeit des Zielgases CO in den verschiedenen genannten Trägerfluiden sind in der Fachliteratur jedoch kaum Daten bekannt. In der Fachliteratur hat der Erfinder insbesondere keine Daten über die Löslichkeit des Zielgases CO in Trägerfluiden wie beispielsweise n-Butan, cis-Butan oder Propan unter Druck und bei Raumtemperatur gefunden. Einzig ein Hinweis, dass CO in flüssigem Propan löslich sein sollte, ergibt sich aus Löslichkeitsdaten des Systems Wasserstoff, CO und Propan im Druckbereich von 33,8 bis 135,2 bar bei 0°C (International Union of Pure and Applied Chemistry, Solubility Data Series, Vol 5/6 Hydrogen and Deuterium, Pergamon Press 1981, p. 528). Werden in diesem System die Daten von CO zuerst linear auf die Menge Null für Wasserstoff extrapoliert und dann auf den Druckbereich von 3 bar bis 11 bar quadratisch extrapoliert, so kann die Löslichkeit von CO in flüssigem Propan auf ca. 10 cm³ bis 13 cm³ gasförmiges CO pro cm³ flüssiges Propan pro bar abgeschätzt werden. Propan könnte also möglicherweise verwendet werden als Trägerfluid für die Herstellung einer gesamten Fluidmischung, die CO als Zielgas enthält und die zusammen mit Luft dann die Testgasmischung für den Test des in dieser Anmeldung beschriebenen CO-Gasalarmmelders erzeugen könnte.

Die Möglichkeit der Speicherung von CO in flüssigem Propan wurde von dem Erfinder deshalb experimentell getestet. Für Standard-Niederdruck-Aluminiumdosen entwickelt reines Propan aber bei +50°C einen zu hohen Druck. Deshalb wurde Propan mit n-Butan und cis-Butan zu einer Trägerfluidmischung gemischt, welche 58 - 66% (w/w) iso-Butan, 0 - 2% (w/w) n-Butan und 34 - 42% (w/w) Propan enthielt. Von dieser flüssigen Trägerfluidmischung wurden ca. 116 g in eine Standard-Niederdruck-Aluminiumdose mit einem Volumen von 350 ml gefüllt und unter Druck CO eingepresst. Die Dose wurde während 1 Minute gut geschüttelt und flüssige Proben konnten sich aus der Dose in eine Infrarot-Gaszelle hinein ausdehnen. Dann wurde das Infrarot-Absorptionsspektrum der gesamten in der Infrarot-Gaszelle befindlichen Gasmischung aufgenommen. Analog wurden die Infrarot- Absorptionsspektren von 701 ppm CO in Luft und von der gasförmigen Trägerfluidmischung alleine aufgenommen.

In Figur 4 sind die entsprechenden Infrarot-Spektren (IR-Spektren), welche alle auf einen konstanten Druck normiert wurden, dargestellt. Das IR-Spektrum der gesamten Gasmischung wurde außerdem berechnet aus der Summe der IR-Einzelspektren von CO und von der Trägerfluidmischung. Die der Summenbildung zugrunde liegenden Anteile wurden dann so lange variiert, bis das experimentelle IR-Spektrum der gesamten Gasmischung exakt wiedergegeben werden konnte. Auf diese Weise konnte die Konzentration von CO in der gesamten Gasmischung bestimmt werden.

Nun wurde diese gesamte Gasmischung bei 232 Tests während jeweils einer Zeitdauer von 0,5 Sekunden auf einen Gasalarmmelder strömen gelassen und nach einer gewissen Anzahl von Tests die CO-Konzentration der ausströmenden gesamten Gasmischung wieder mittels IR-Spektroskopie bestimmt. Pro Test entwickelten sich dabei ca. 220 cm³ gesamte Gasmischung. Aus diesen Messungen wurde dann die relative Menge von CO, die bei jedem Test auf den Gasmelder gelangte, in Bezug auf den Anfangswert berechnet.

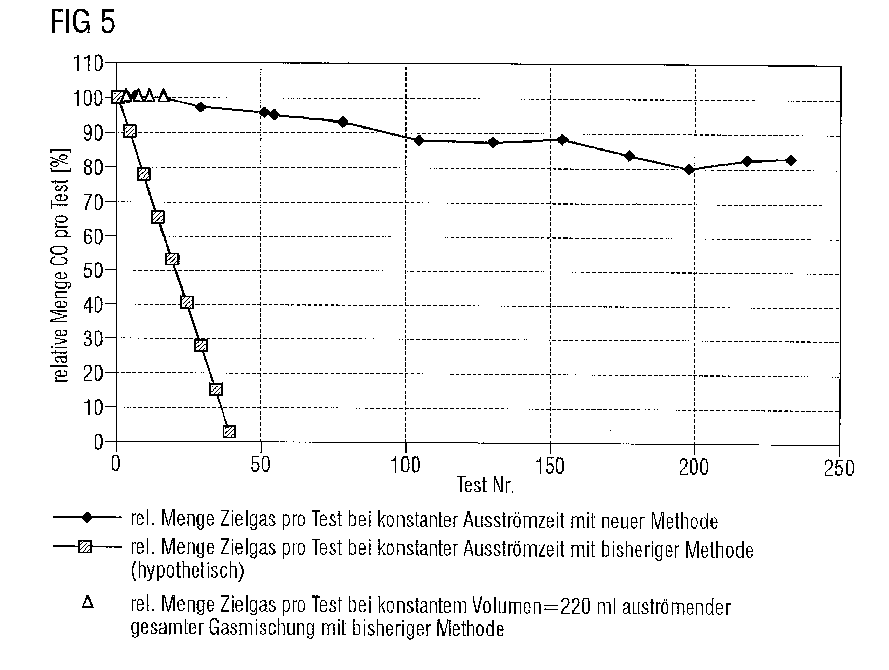

Die entsprechenden Messwerte sind in Figur 5 mit der Bezeichnung "rel. Menge Zielgas pro Test bei konstanter Ausströmzeit mit neuer Methode" aufgeführt. In Figur 5 sind zum Vergleich auch zwei Datensätze dargestellt, die bei der Anwendung von bisherigen Testmethoden gewonnen wurden, wobei die Dose jeweils zu Beginn bei einer Temperatur von +25°C unter einem Anfangsdruck von 10 bar steht. Ein erster Datensatz ist dabei bei einer ersten bekannten Testsequenz aufgenommen worden, bei der ca. 40 hypothetische Tests mit immer ungefähr gleich langer Ausströmzeit und damit mit laufend sinkender Menge des entnommenen Zielgases durchgeführt wurden. Ein zweiter Datensatz ist bei einer zweiten bekannten Testsequenz aufgenommen worden, wobei bei jedem Testvorgang immer 220 ml der gesamten Gasmischung auf den Gasalarmmelder gegeben wird, so dass die Dose nach 16 Testvorgängen entleert ist.

Figur 5 zeigt, dass mit der neuen Methode mindestens 14 mal mehr Tests durchgeführt werden können als mit der bisherigen Methode bei konstanter Menge des Zielgases. Die auf den Gasalarmmelder gelangende Menge CO variiert bei der neuen Methode um maximal 20%, was für die Kontrolle eines Gasalarmmelders genügend genau ist. Verglichen mit der bisherigen Methode, bei der immer ca. die gleiche Ausströmzeit angewendet wird, zeigt die neue Methode eine viel stabilere Menge des Zielgases pro Test. Außerdem sind mit der neuen Methode ca. 6 mal mehr Tests möglich. Die neue Methode stellt also eine sehr große Verbesserung gegenüber den bisherigen Methoden dar obwohl die neue Methode mit den kostengünstigen Standard-Niederdruck-Aluminiumdosen durchgeführt werden kann.

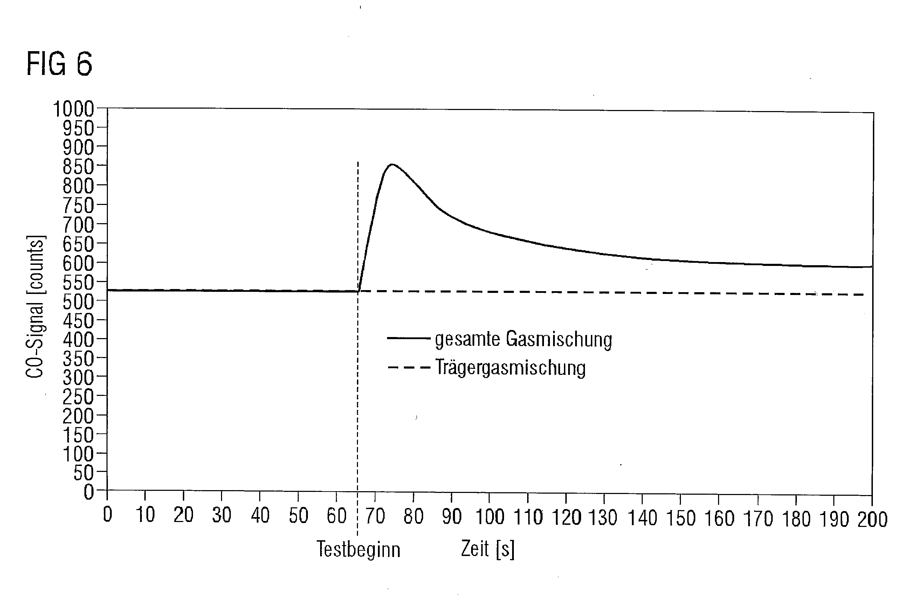

Figur 6 zeigt die Signale eines Gasalarmmelders, der mit einem elektrochemischen CO-Sensor bestückt ist, wenn er entweder nur mit der oben erwähnten Trägergasmischung bzw. Trägerfluidmischung oder mit der oben erwähnten gesamten Gasmischung bzw. Fluidmischung ( = Trägergasmischung + CO) beaufschlagt wird. Wie aus Figur 6 ersichtlich, erkennt der elektrochemische CO-Sensor nur CO, nicht aber die Komponenten der Trägergasmischung n-Butan, iso-Butan und Propan. Dies bedeutet, dass die verwendete Trägergasmischung den Nachweis des Zielgases CO nicht beeinträchtigt.

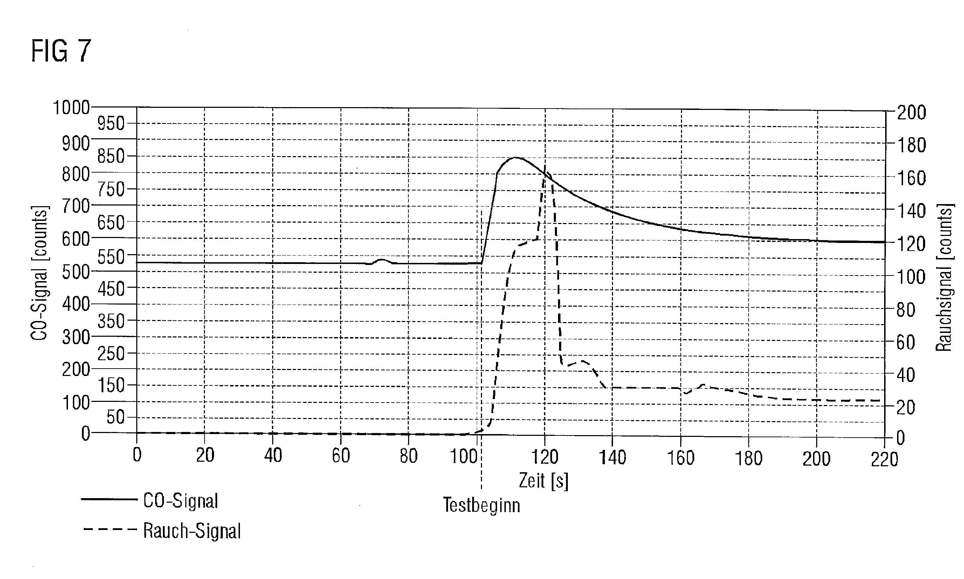

Figur 7 zeigt ein Diagramm, in dem als Funktion der Zeit (a) das Ausgangssignal eines Kohlenmonoxid-Gassensors und (b) das Ausgangssignal eines optischen Rauchsensors bei einem Funktionstest aufgetragen ist, bei dem zum Zeitpunkt des Testbeginns eine Testgasmischung verwendet wird, welche neben einem Trägergas noch das Zielgas CO und einen Aerosolbildner aufweist. Die Testgasmischung wird, wie oben bereits erläutert, aus der flüssigen Phase einer Testfluidmischung gewonnen, welche in einer Standard-Niederdruck-Aluminiumdose aufbewahrt ist. Als Aerosolbildner wurde Sebazinsäure-bis-2-ethylhexylester vorgelegt und dann n-Butan, cis-Butan und Propan sowie etwas CO als Zielgas zugefügt und gut umgeschüttelt. Mit dieser gesamten Testfluidmischung, die nun neben dem Zielgas auch noch einen Aerosolbildner enthielt, wurden Tests mit einem kombinierten elektrochemischen CO-Gas- und optischen Rauchalarmmelder durchgeführt.

Wie aus Figur 7 ersichtlich, zeigen sowohl das Ausgangssignal des CO-Gasalarmmelders als auch des Ausgangssignal des optischen Rauchalarmmelders einen signifikanten Anstieg, so dass die in dieser Anmeldung beschriebene Testmethode zum Überprüfen der Funktionsfähigkeit eines Gasalarmmelders auch für einen Kombinationsalarmmelder sehr gut funktioniert, welcher neben einem Gassensor auch einen optischen Rauchsensor aufweist.

Es wird darauf hingewiesen, dass die hier beschriebenen Ausführungsformen lediglich eine beschränkte Auswahl an möglichen Ausführungsvarianten der Erfindung darstellen. So ist es möglich, die Merkmale einzelner Ausführungsformen in geeigneter Weise miteinander zu kombinieren, so dass für den Fachmann mit den hier expliziten Ausführungsvarianten eine Vielzahl von verschiedenen Ausführungsformen als offensichtlich offenbart anzusehen sind.

## Patentansprüche

1. Testvorrichtung zum Überprüfen der Funktionsfähigkeit eines Gasalarmmelders (260), die Testvorrichtung (100, 200) aufweisend
• einen Vorratsbehälter (110), in welchem sich ein Zielfluid (112b, 114b) und ein Trägerfluid (112a, 114a) befinden,
wobei zumindest ein Teil des Trägerfluids (112a) in einem flüssigen Aggregatszustand vorliegt, und
wobei das Zielfluid (112b) zumindest teilweise in dem flüssigen Trägerfluid (112a) gelöst ist, und
• eine Entnahmeeinrichtung (120, 122, 222, 124), welche derart in den Vorratsbehälter (110) eingreift, dass das Zielfluid (112b) zusammen mit dem flüssigen Trägerfluid (112a) entnehmbar ist,
wobei das Zielfluid (112a) derart beschaffen ist, das es, wenn es in einen Erfassungsbereich eines funktionsbereiten Gasalarmmelders (260) gelangt, eine Alarmmeldung durch den Gasalarmmelder (260) veranlasst.

2. Testvorrichtung nach dem vorangehenden Anspruch, bei der das Trägerfluid (112a, 114a) und das Zielfluid (112b, 114b) eine Testfluidmischung bilden, welche in dem Vorratsbehälter teilweise in der flüssigen Phase (112) und teilweise in der gasförmigen Phase (114) vorliegt.

3. Testvorrichtung nach dem vorangehenden Anspruch, bei der die Entnahmeeinrichtung ein Steigrohr (120) mit einem ersten Ende und einem zweiten Ende aufweist,
wobei sich das erste Ende innerhalb der flüssigen Phase (112) der Testfluidmischung befindet und
wobei an dem zweiten Ende ein Entnahmeventil (122) zum Entnehmen der flüssigen Testfluidmischung (112) angebracht ist.

4. Testvorrichtung nach einem der beiden vorangehenden Ansprüche, wobei die Konzentration des Zielfluids (112b) in der flüssigen Phase der Testfluidmischung (112) zwischen 1 ppm und 10000 ppm beträgt.

5. Testvorrichtung nach einem der vorangehenden Ansprüche,
wobei
das Trägerfluid (112a, 114a) zumindest eine der folgenden Substanzen enthält:
Propan, n-Butan, iso-Butan, Dimethyläther oder 1,1,1,2-Tetrafluorethan.

6. Testvorrichtung nach einem der vorangehenden Ansprüche,
wobei
das Zielfluid (112b, 114b) zumindest eine der folgenden Substanzen enthält:
Kohlenmonoxid, Kohlendioxid, Äthanol, Ammoniak.

7. Testvorrichtung nach einem der vorangehenden Ansprüche,
wobei
sich in dem Vorratsbehälter (110) ferner ein Aerosolbildner befindet.

8. Testvorrichtung nach dem vorangehenden Anspruch, wobei der Aerosolbildner zumindest eine der folgenden Substanzen enthält:
Sebazinsäure-bis-2-ethylhexylester, Sebazinsäure-diester mit diversen Estergruppen, Phthalsäure-dibutylester, Phthalsäurebis-ethylhexylester.

9. Testvorrichtung nach einem der vorangehenden Ansprüche,
wobei
sich in dem Vorratsbehälter (110) ferner ein Aromastoff befindet.

10. Testsystem zum Überprüfen der Funktionsfähigkeit eines Gasalarmmelders (260), das Testsystem (250) aufweisend
● eine Testvorrichtung (100, 200) nach einem der vorangehenden Ansprüche,
● eine Halteeinrichtung (252) zum Aufnehmen der Testvorrichtung (100, 200) und
● ein Abdeckungselement (254), welches an der Halteeinrichtung (252) angebracht ist und welches derart ausgebildet ist, dass zwischen der aufgenommenen Testvorrichtung (100, 200) und einem Gassensor des Gasalarmmelders (260) ein Testraum (256) zumindest annähernd von der Umgebung des Gasalarmmelders (260) räumlich abtrennbar ist.

11. Testverfahren zum Überprüfen der Funktionsfähigkeit eines Gasalarmmelders (260) unter Verwendung einer Testvorrichtung (100, 200) nach einem der Ansprüche 1 bis 10, das Testverfahren aufweisend
● Einbringen des flüssigen Trägerfluids (112a) zusammen mit dem darin gelösten Zielfluid (112b) in den Erfassungsbereich des Gasalarmmelders (260),
● Überprüfen der Funktionsfähigkeit des Gasalarmmelders (260),
- wobei der Gasalarmmelder (260) als funktionsfähig klassifiziert wird, wenn von diesem eine Alarmmeldung ausgegeben wird, und
- wobei der Gasalarmmelder (260) als nicht funktionsfähig klassifiziert wird, wenn von diesem keine Alarmmeldung ausgegeben wird.

12. Verfahren zum Herstellen einer Testvorrichtung nach einem der Ansprüche 1 bis 9, das Verfahren aufweisend
● Befüllen des Vorratsbehälters (110) mit dem Trägerfluid (112a, 114a),
● Befüllen des Vorratsbehälters (110) mit dem Zielfluid (112b, 114b), und
● Abdichten des befüllten Vorratsbehälters (110), so dass sich in dem Vorratsbehälter (110) ein Überdruck aufbauen und/oder erhalten kann.

13. Verfahren nach Anspruch 12, zusätzlich aufweisend
● Evakuieren des Vorratsbehälters (110) vor dem Befüllen mit dem Trägerfluid (112a, 114a) und dem Befüllen mit dem Zielfluid (114a, 114b).

14. Verfahren nach Anspruch 12, zusätzlich aufweisend
● Beaufschlagen des Vorratsbehälters (110) mit einem inerten Gas mit Überdruck und Entleeren des Vorratsbehälters (110) vor dem Befüllen mit dem Trägerfluid (112a, 114a) und dem Befüllen mit dem Zielfluid (112b, 114b).
